Europäisches Patentamt

European Patent Office

Office européen des brevets

(11) Veröffentlichungsnummer: **0 269 954 B1**

# EUROPÄISCHE PATENTSCHRIFT

(45) Veröffentlichungstag der Patentschrift: **29.07.92**

(51) Int. Cl.5: **B23K 9/10**

(21) Anmeldenummer: **87117080.9**

(22) Anmeldetag: **19.11.87**

(54) **Schaltungsanordnung zur Steuerung des Schweissstromes.**

(30) Priorität: **03.12.86 AT 3220/86**

(43) Veröffentlichungstag der Anmeldung:
**08.06.88 Patentblatt 88/23**

(45) Bekanntmachung des Hinweises auf die
Patenterteilung:
**29.07.92 Patentblatt 92/31**

(84) Benannte Vertragsstaaten:
**BE CH DE LI LU NL SE**

(56) Entgegenhaltungen:
**AT-B- 374 718**
**DE-A- 3 226 725**

**U. Tietze, Ch.**
**Schenk:"Halbleiter-Schaltungstechnik", 4.**
**Auflage, Springer Verlag, 1978**

(73) Patentinhaber: **ELIN-UNION Aktiengesellschaft**
**für elektrische Industrie**
**Penzinger Strasse 76**
**A-1141 Wien(AT)**

(72) Erfinder: **Habeler, Heinz, D. I.**
**Auersperggasse 19**
**A-8010 Graz(AT)**

(74) Vertreter: **Krause, Peter**
**Penzinger Strasse 76**
**A-1141 Wien(AT)**

**Beschreibung**

Die Erfindung betrifft eine Schaltungsanordnung zur Steuerung des Schweißstromes beim Suchlichtbogen sowie beim Lichtbogen für die Endkraterfüllung bei einem Schweißvorgang einer Schutzgasschweißanlage, wobei diese vorzugsweise einen Schweißgenerator oder Schweißumformer mit einer Feldwicklung aufweist.

Es werden eine Reihe von Schweißverfahren unterschieden, von denen das Elektrodenhandschweißen eine besondere Verbreitung gefunden hat. Mit eigens dafür ausgelegten Zusatzgeräten ist es möglich, einen Teil der weit verbreiteten Stromquellen für die Elektrodenhandschweißung auch für das WIG-Schweißen (Wolfram-Inertgas-Schweißen) einzusetzen. Das besondere am WIG-Verfahren besteht darin, daß die den Lichtbogen haltende Elektrode, der Wolfram-Stift, nicht am Materialübergang beteiligt ist, sondern nur die Funktion hat, den Lichtbogen als Wärmequelle stabil zu führen. Damit können im Dünnblechbereich bereits Bördel-Nähte ohne Zusatzwerkstoffe geschweißt werden. Als Zusatzwerkstoff kann aber bei Bedarf ein am Stromübergang selbst nicht beteiligter Schweißdraht seitlich eingebracht und abgeschmolzen werden. Aus meist konzentrischen Düsen um den zentralen als Lichtbogenansatz funktionierender Wolfram-Stift strömt ein Schutzgas, im allgemeinen Argon oder ein Argon-Gemisch, welches als inertes, an den chemischen Reaktionen nicht teilnehmendes Gas einen Schutzmantel um die hoch erhitzte Schweißstelle breitet und den Zutritt der Umgebungsluft verhindert. Es können somit keine Oxidationsprozesse und kein Legierungsausbrand stattfinden.

Im praktischen Betrieb soll berührungsfrei gezündet werden, wozu eine Hochfrequenz-Hochspannungs-Zündenergie der Schweißspannung überlagert werden muß. Weiters muß unmittelbar nach Beendigung der Schweißung das Schutzgas noch eine Weile weiterströmen, um ein Oxidieren der allmählich erkaltenden Schweißstelle zu verhindern. Als sehr zweckmäßig hat sich erwiesen, wenn der Strom am Ende der Schweißung nicht abrupt auf Null abgeschaltet wird, sondern allmählich abklingt, womit eine sehr saubere Endkraterfüllung möglich ist. Auch der Stromanstieg zu Beginn der Schweißung soll zweckmäßigerweise nicht zu schnell erfolgen.

Aus Vorstehendem ist zu entnehmen, daß eine zeitlich korrelierte Abfolge von Funktionen notwendig ist, daß also eine Ablaufsteuerung für die Funktionen Zünden, Gasströmen und Schweißen notwendig ist. Das Einleiten und Beendigen von Zündung und Schutzgasfluß sind leicht mit Zeitrelais oder elektronischen Zähler-Schaltungen zu erreichen. Bei den Zeitrelais gibt es eine große Zahl verläßlicher Typen, teils auf mechanischer oder pneumatischer Basis. Wesentlich raumsparender sind elektronische Schaltungen mit einem digitalen Zähler. Das eigentliche Problem stellt jedoch das Erreichen der Schweißstromfunktionen dar. Denn es kann sinnvoll und wirtschaftlich nur zusammen mit den jeweiligen Auslegungsmerkmalen der Schweißstromquelle das Ansteigen und Abfallen des Schweißstromes erzwungen werden. Gewiß ist es möglich, unabhängig von der jeweiligen Stromquelle, durch Einfügen einer Regel- oder Schaltstrecke in den Schweißkreis die zeitliche Stromveränderung zu erreichen, aber derartige Schaltungen sind im Bauteilaufwand weit umfangreicher und teurer als jene, welche in den Steuerungskreis der Stromquelle direkt eingreifen.

Rotierende Schweißstromquellen benötigen im allgemeinen höhere Steuerleistungen als statische Schweißstromquellen, weshalb dazupassende WIG-Ablauf-Steuerungen mit vergleichsweise großem Bauteilaufwand ausgestattet sind. Eine aus der AT-PS Nr. 362 457 und der AT-PS Nr. 374 718 bekannte Realisierung verwendet im wesentlichen einen großen Elektrolyt-Kondensator, der parallel zur Feldwicklung der Erregermaschine geschaltet wird und auf diese Weise die allmähliche Stromveränderung bewirkt. Zu dem Aufwand tritt als nachteilig empfunden, die Art des Ablaufs hinzu: Entsprechend der e-Funktion einer Kondensatorentladung ist der Abfall zu Beginn am stärksten und verflacht dann stark, sodaß der Übergang vom vollen Schweißstrom auf den Abfall als Unstetigkeit bemerkt wird.

Aufgabe der Erfindung ist es, eine Schaltungsanordnung der eingangs genannten Art zu schaffen, die die oben genannten Nachteile vermeidet und die auch in Bezug auf den Energieverbrauch verlustarm arbeitet.

Die erfindungsgemäße Schaltungsanordnung ist dadurch gekennzeichnet, daß ein Impulsbreitenmodulator vorgesehen ist, der wie an sich bekannt, aus einem Dreiecksgenerator und einem nachgeschalteten Komparator besteht, der einen für den Schweißstrom maßgebenden Erregerstrom mit einem im zeitlichen Ablauf selbsttätig veränderlichen Tastverhältnis auf die Feldwicklung schaltet, und daß in Serie zur Feldwicklung die Kollektor-Emitter-Strecke eines Schalttransistors, der vom Impulsbreitenmodulator ansteuerbar ist, liegt, und daß parallel zu dieser Serienschaltung ein Freilaufkreis angeordnet, der aus einem Widerstand mit einer Zenerdiode in Serie besteht.

Diese Schaltung ist bevorzugt für rotierende Schweißstromquellen einzusetzen, arbeitet mit elektronischen Bauteilen, greift direkt in den Steuerkreis der Stromquelle ein und gestattet die Realisierung linearer Stromfunktionen. Als Vorteile kommen noch geringer Bauteilaufwand, geringer Platzbedarf und eine geringe Verlustleistung hinzu. Für die Stromsteuerung ist somit durch die Erfindung eine möglichst verlustarme Einrichtung gegeben.

Aus dem Fachbuch Halbleiter-Schaltungstechnik, Tietze-Schenk, vierte Auflage, Springer Verlag 1978, Seite 223, ist das Time-Division-Verfahren zur Erzeugung von Rechteckschwingungen konstanter Amplitude bekannt. Die ebenfalls diesem Fachbuch entnehmbare Anordnung für dieses Verfahren besteht aus einem Dreieckgenerator dem ein Komparator nachgeschaltet ist.

Nach einer besonderen Ausgestaltung der Erfindung ist der Erregerstrom für die Feldwicklung der über eine Diodenbrücke gleichgerichtete und über einen Stromwandler transformierte Schweißstrom.

Beim compound-erregten Generator wird somit ein Stromwandler vom Schweißstrom, einem Teil des Schweißstromes oder auch nur von einem dem Schweißstrom proportionalen Strom durchflossen. Seine Sekundärseite besitzt als Bürde über die Gleichstrombrücke im wesentlichen die Feldwicklung. Würde man den Feldstrom öffnen, so würde der Stromwandler in bekannter Weise mit außerordentlich hohen und für das System unzulässigen Spannungsspitzen antworten. Es darf also in diesem Kreis der Sekundärstrom nie unterbrochen werden. Dies wird durch den Freilaufkreis, der aus einem Widerstand und einer Zenerdiode besteht, erreicht, wodurch der Feldstrom einerseits auf das Feld und andererseits auf einen Ersatzwiderstand verteilt wird. Mit abnehmendem Tastverhältnis wird ein geringerer Stromanteil auf das Feld gelegt. In weiterer Folge sinkt der Wandlerstrom an sich und der Schweißstrom klingt nach einer im wesentlichen linearen Funktion ab.

Nach einem weiteren Merkmal der Erfindung besteht der Dreiecksgenerator aus einem Operationsverstärker, dessen nichtinvertierender Eingang einerseits über einen Widerstand an einem an einer Versorgungsspannung angeschlossenem Spannungsteiler anliegt und andererseits über einen Gegenkopplungswiderstand mit dem Ausgang des Operationsverstärkers verbunden ist und daß der invertierende Eingang an den Verbindungspunkt, der gleichzeitig der Ausgang des Dreiecksgenerators ist, eines Widerstandes mit einem Kondensator angeschlossen ist, wobei der Widerstand mit dem Ausgang des Operationsverstärkers verbunden ist und der Kondensator an einem Pol der Versorgungsspannung angeschlossen ist. Dies ist eine der möglichen Ausführungen des Dreiecksgenerators.

Eine vorteilhafte Weiterbildung der Erfindung besteht darin, daß der Komparator aus einem Operationsverstärker besteht an dessen invertierenden Eingang die Dreieckspannung anliegt und daß der nichtinvertierende Eingang mit einem an einem Pol der Versorgungsspannung angeschlossenen Kondensator sowie zwei Potentiometern verbunden ist und daß an jedem Potentiometer ein Transistor angeschlossen ist von denen der eine ein npn- und der andere ein pnp-Transistor ist und daß weiters jeder Transistor an einen Spannungsteiler der an der Versorgungsspannung liegt, angeschlossen ist, wobei durch die beiden Spannungsteiler an dem einen Transistor der untere und an dem anderen der obere Spannungsspitzenwert der Dreieckspannung anliegt und daß die Ansteuerung der Transistoren durch Taster an der Schutzgasschweißanlage oder an dessen Brenner erfolgt. Die Ansteuerung der Ablaufsteuerung kann somit von einem Taster am Brenner erfolgen. Die Verarbeitung dieses Signales übernimmt ein Flipflop, welches natürlich auch die mechanische Version in Form eines impulsgesteuerten Schrittschaltwerkes sein kann. Beim 1. Taster-Signal wird die Steuerspannung eingeschaltet. Gleichzeitig wird die HF-Zündung über einen Zähler und das Gasventil direkt eingeschaltet. Der Strom steigt an.

Die Erfindung wird an Hand der Schaltbilder und des Zeitdiagrammes näher erläutert. Fig. 1 zeigt den Dreiecksgenerator, Fig. 2 den Komparator, Fig. 3 die Ansteuerung der Feldwicklung, Fig. 4 und 5 das Zeitdiagramm.

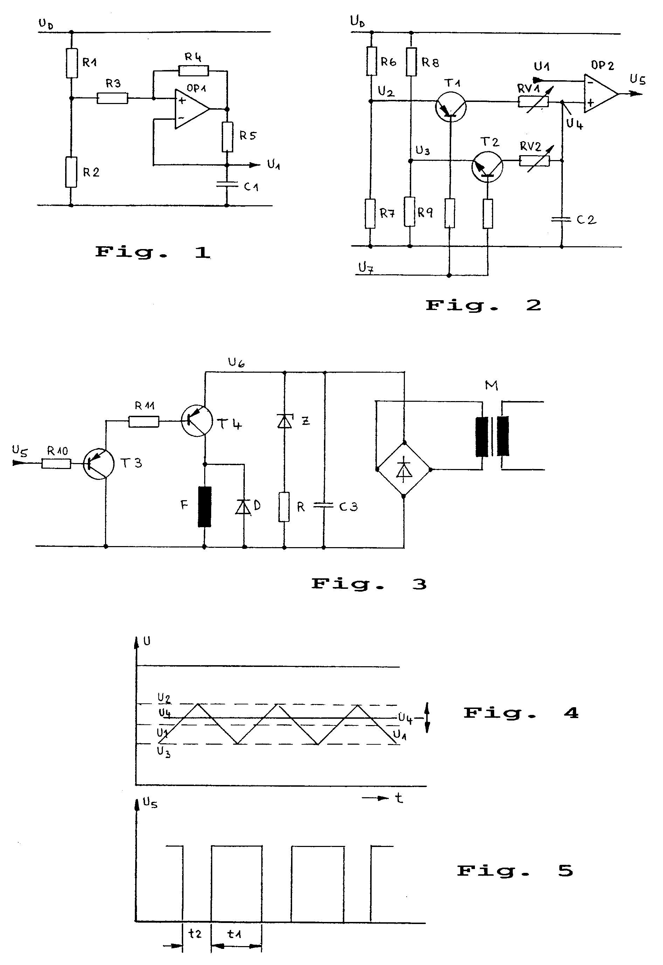

Bei Fig. 1, die den Dreiecksgenerator zeigt, legen die Widerstände R1, R2 eine Mittelspannung an den nicht invertierenden Eingang des Operationsverstärkers OP1. Weiters sind noch zwei Mitkopplungswiderstände R3, R4 vorgesehen. Die Frequenz ist abhängig von R5 und C1, sowie auch von der Spannungsamplitude. Am Ausgang U1 steht ein angenähertes differenziertes Signal, welches eine Dreieckspannung ist, mit einem Mittelwert entsprechend dem Spannungsteiler U1 = UD x R2/(R1 + R2), einem Maximalwert von U2 und einem Minimalwert von U3 wie aus Fig. 4 ersichtlich, zur Verfügung.

Fig. 2 zeigt einen Operationsverstärker OP2, dessen invertierender Eingang das Dreieck-Signal erhält. Am nicht invertierendem Eingang liegt eine Spannung U4 (siehe Fig. 4), die zwischen den Werten U2 und U3 liegt, wodurch am Ausgang des Operationsverstärkers OP2 Rechtecksignale U5 (siehe Fig. 5), erscheinen, deren zeitliche Dauer von der Höhe der Spannung U4 abhängt. Durch Variieren von U4 sind verschiedene Verhältnisse von Takt T1 und Pause T2 erreichbar. Die Spannung U4 verändert sich jedoch selbsttätig, innerhalb der Grenzen U2 und U3, wie die Fig. 2 zeigt. Der Komparator erhält als Vorgabe die beiden Grenzspannungen U2 über den Spannungsteiler R6/R7 und U3 über den Spannungsteiler R8/R9. Diese Grenzspannungen werden über die Schalttransistoren T1, T2 sowie die Einstellwiderstände RV1, RV2 an den nicht invertierenden Eingang des Operationsverstärkers OP2 gelegt, der außerdem über einen Kondensator C2 am Bezugspotential liegt. Je nach Ansteuerung von T1 oder T2 über die Steuerspannung U7 erhält der nicht invertierende Eingang des Operationsverstärkers OP2 eine abfallende oder ansteigende Spannung, deren zeitlicher Gradient von dem Einstellwiderstand RV1 bzw. RV2 und C2 abhängt. Als Folge gibt der Operationsverstärker OP2 an seinem Ausgang U5 eine Impulsfolge mit selbsttätig variablem Tastverhältnis ab, das von einem Extremwert zum anderen kontinuierlich wandert. Mit RV2 ist die Stromabfallzeit unabhängig von der über RV1 wählbaren Stromanstiegszeit einstellbar.

Bei Fig. 3 wird als Vorstufe der Transistor T3 über den Basiswiderstand R10 vom Operationsverstärker OP2 der das Rechtecksignal liefert, angesteuert und in weiterer Folge die Leistungsstufe T4 und R11. Dieser Aufbau sichert der Endstufe hohe Schaltgeschwindigkeit und als Folge davon geringe Schaltverluste, da die Flankensteilheit des Rechtecksignals U5 wesentlich vergrößert wird. Die Feldwicklung F liegt mit variabler Zeitdauer an der gleichgerichteten Sekundärspannung U6 des Wandlers M.

Für die Beherrschung der Pausenzeiten in der Feldwicklung F ist eine mögliche Schaltung in Fig. 3 dargestellt. Eine Zener-Diode Z schaltet aufgrund des beginnenden Spannungsanstieges bei der Strompause in der Feldwicklung F auf den Widerstand R durch, der bei Bemessung ähnlich des Feldwicklungswiderstandes die Sekundärspannung auf ungefährliche Werte begrenzt, andernfalls würde der dem Stromwandler eingeprägte Strom zur Zerstörung oder Gefährdung von Bauteilen führen. Eine elegantere Lösung besteht darin, die Zenerdiode Z durch einen Schalttransistor zu ersetzen, der in den Pausenzeiten für die Feldwicklung F den Widerstand R einschaltet, also im Gegentakt zu T4 arbeitet. Unbedingt erforderlich ist die Freilaufdiode D parallel zur Feldwicklung F. Mit einer Kapazität C3 läßt sich der zeitliche Gradientverlauf beeinflussen. Die konstante Versorgungsspannung UD ist natürlich nicht identisch mit der Wandlersekundärspannung U6, beide besitzen aber gleiches Bezugspotential.

Es ist auch möglich, daß der Stromanstieg oder Stromabfall bei irgendeinem Zwischenwert halt macht. Zu diesem Zweck sind weitere Spannungswerte U4 vorzusehen und an den nicht invertierenden Eingang des Operationsverstärkers OP2 zu schalten. Weiters kann der Schweißer bei langsam eingestellter Änderungsgeschwindigkeit durch mehrmaliges Betätigen des Tasters einen beliebigen Schweißstromwert unterhalb des gewählten Maximums gut einhalten, um kurzzeitige Veränderungen aufgrund des Werkstückverlaufes ohne Verdrehung der Grundeinstellung an der Stromquelle zu erhalten.

**Patentansprüche**

1. Schaltungsanordnung zur Steuerung des Schweißstromes beim Suchlichtbogen sowie beim Lichtbogen für die Endkraterfüllung bei einem Schweißvorgang einer Schutzgasschweißanlage, wobei diese einen Schweißgenerator oder Schweißumformer mit einer Feldwicklung aufweist, dadurch gekennzeichnet, daß ein Impulsbreitenmodulator vorgesehen ist, der, aus einem Dreiecksgenerator und einem nachgeschalteten Komparator besteht, der einen für den Schweißstrom maßgebenden Erregerstrom (U6) mit einem im zeitlichen Ablauf selbsttätig veränderlichen Tastverhältnis auf die Feldwicklung (F), schaltet, und daß in Serie zur Feldwicklung (F) die Kollektor-Emitter-Strecke eines Schalttransistors (T4), der vom Impulsbreitenmodulator ansteuerbar ist, liegt, und daß parallel zu dieser Serienschaltung ein Freilaufkreis angeordnet ist, der aus einem Widerstand (R) mit einer Zenerdiode (Z) in Serie besteht.

2. Schaltungsanordnung nach Anspruch 1, dadurch gekennzeichnet, daß der Erregerstrom (U6) für die Feldwicklung (F) der über eine Diodenbrücke gleichgerichtete und über einen Stromwandler (M) transformierte Schweißstrom ist.

3. Schaltungsanordnung nach Anspruch 1 oder 2, dadurch gekennzeichnet, daß der Dreiecksgenerator aus einem Operationsverstärker (OP$_1$) besteht, dessen nichtinvertierender Eingang einerseits über einen Widerstand (R$_3$) an einem an einer Versorgungsspannung (U$_D$) angeschlossenem Spannungsteiler (R$_1$, R$_2$) anliegt und andererseits über einen Gegenkopplungswiderstand (R$_4$) mit dem Ausgang des Operationsverstärkers (OP$_1$) verbunden ist und daß der invertierende Eingang an den Verbindungspunkt, der gleichzeitig der Ausgang (U$_1$) des Dreiecksgenerators ist, eines Widerstandes (R$_5$) mit einem Kondensator (C$_1$) angeschlossen ist, wobei der Widerstand (R$_5$) mit dem Ausgang des Operationsverstärkers (OP$_1$) verbunden ist und der Kondensator (C$_1$) an einem Pol der Versorgungsspannung (U$_D$) angeschlossen ist.

4. Schaltungsanordnung nach mindestens einen der Ansprüche 1 bis 3, dadurch gekennzeichnet, daß der Komparator aus einem Operationsverstärker (OP$_2$) besteht an dessen invertierenden Eingang die Dreieckspannung (U$_1$)

anliegt und daß der nichtinvertierende Eingang mit einem an einem Pol der Versorgungsspannung angeschlossenen Kondensator (C₂) sowie zwei Potentiometern (R_{V1},R_{V2}) verbunden ist und daß an jedem Potentiometer (R_{V1},R_{V2}) ein Transistor (T₁,T₂) angeschlossen ist von denen der eine ein npn- und der andere ein pnp-Transistor ist und daß weiters jeder Transistor (T₁,T₂) an einen Spannungsteiler (R₆,R₇ bzw. R₈,R₉) der an der Versorgungsspannung (U_D) liegt, angeschlossen ist, wobei durch die beiden Spannungsteiler (R₆,R₇ bzw. R₈,R₉) an dem einen Transistor (T₁ bzw. T₂) der untere und an dem anderen der obere Spannungsspitzenwert der Dreieckspannung (U₁) anliegt und daß die Ansteuerung der Transistoren (T₁, T₂) durch Taster an der Schutzgasschweißanlage oder an dessen Brenner erfolgt.

## Claims

1. Circuit arrangement for controlling the welding current in the spotlight arc and in the electric arc for the final crater filling during a welding process of a gas-shielded welding installation having a welding generator or welding motor-generator with a field winding, characterized in that a pulse width modulator comprising a delta generator and a downstream comparator is provided, which connects to the field winding (F) an excitation current (U6), determining the welding current, with a pulse duty factor which automatically varies in the course of time, and that connected in series to the field winding (F) is the collector-emitter section of a switching transistor (T₄) which may be triggered by the pulse width modulator, and that arranged in parallel to said series connection is a freewheeling circuit comprising a resistor (R) with a Zener diode (Z) in series.

2. Circuit arrangement according to claim 1, characterized in that the excitation current (U6) for the field winding (F) is the welding current rectified via a diode bridge and transformed via a current transformer (M).

3. Circuit arrangement according to claim 1 or 2, characterized in that the delta generator comprises an operational amplifier (OP₁), whose non-inverting input is connected on the one hand via a resistor (R₃) to a voltage divider (R₁, R₂) connected to a supply voltage (U_D) and on the other hand via a negative-feedback resistor (R₄) to the output of the operational amplifier (OP₁), and that the inverting input is connected to the connection point, which is simultaneously the output (U₁) of the delta generator, of a resistor (R₅) by a capacitor (C₁), the resistor (R₅) being connected to the output of the operational amplifier (OP₁) and the capacitor (C₁) being connected to one pole of the supply voltage (U_D).

4. Circuit arrangement according to at least one of claims 1 to 3, characterized in that the comparator comprises an operational amplifier (OP₂), to whose inverting input the delta voltage (U₁) is applied, and that the non-inverting input is connected to a capacitor (C₂), which is connected to one pole of the supply voltage, and two potentiometers (R_{V1}, R_{V2}), and that connected to each potentiometer (R_{V1}, R_{V2}), is a transistor (T₁, T₂), one of said transistors being an n-p-n transistor and the other a p-n-p transistor, and that further each transistor (T₁, T₂) is connected to a voltage divider (R₆, R₇ or R₈, R₉) connected to the supply voltage (U_D), with the two voltage dividers (R₆, R₇ or R₈, R₉) applying to one transistor (T₁ or T₂) the lower and to the other transistor the upper voltage peak value of the delta voltage (U₁), and that triggering of the transistors (T₁, T₂) is effected by means of probes on the gas-shielded welding installation or on the torch of said installation.

## Revendications

1. Circuit pour la commande du courant de soudage à l'arc à tête chercheuse et de soudage à l'arc pour le remplissage du cratère final dans une opération de soudage d'une installation de soudage sous gaz protecteur, cette installation comprenant un générateur de soudage ou transformateur de soudage comportant un enroulement de champ, caractérisé en ce qu'il est prévu un modulateur de largeur d'impulsions qui est composé d'un générateur en triangle et d'un comparateur monté en aval, lequel commute sur l'enroulement de champ (F) un courant d'excitation (U6) qui est déterminant pour le courant de soudage, avec un facteur d'utilisation des impulsions automatiquement variable dans le temps sur l'enroulement de champ (F), en ce que le circuit collecteur-émetteur d'un transistor de commutation (T₄) monté en série avec l'enroulement de champ (F) peut être commandé par le modulateur de largeur d'impulsions, et en ce que, en parallèle avec ce circuit série est agencé un circuit roue libre qui est composé d'une résistance (R) et d'une diode de Zener (Z) en série.

2. Circuit selon la revendication 1, caractérisé en ce que le courant d'excitation (U6) envoyé à l'enroulement de champ (F) est le courant de soudage redressé par un pont de diodes et transformé au moyen d'un transformateur de courant (M).

3. Circuit selon la revendication 1 ou 2, caractérisé en ce que le générateur en triangle est composé d'un amplificateur opérationnel (OP$_1$) dont l'entrée non inverseuse est connectée, d'une part, à travers une résistance (R$_3$), à un diviseur de tension (R$_1$, R$_2$) connecté lui-même à une tension d'alimentation (U$_D$) et, d'autre part, à travers une résistance de contrecouplage (R$_4$), à la sortie de l'amplificateur opérationnel (OP$_1$), et en ce que l'entrée inverseuse est connectée au point de jonction, qui forme en même temps la sortie (U$_1$) du générateur en triangle, entre une résistance (R$_5$) et un condensateur (C$_1$), la résistance (R$_5$) étant connectée à la sortie de l'amplificateur opérationnel (OP$_1$) et le condensateur (C$_1$) étant connecté à un pôle de la tension d'alimentation (U$_D$).

4. Circuit selon au moins une des revendications 1 à 3, caractérisé en ce que le comparateur est composé d'un amplificateur opérationnel (OP$_2$) à l'entrée inverseuse duquel est appliquée la tension en triangle (U$_1$) et en ce que l'entrée inverseuse est connectée à un condensateur (C$_2$) connecté à un pôle de la tension d'alimentation ainsi qu'à deux potentiomètres (R$_{V1}$, R$_{V2}$) et en ce qu'à chaque potentiomètre (R$_{V1}$, R$_{V2}$) est connecté un transistor (T$_1$, T$_2$), dont l'un est un transistor npn et l'autre un transistor pnp, et en ce que, par ailleurs, chaque transistor (T$_1$, T$_2$) est connecté à un diviseur de tension (R$_6$, R$_7$ ou R$_8$, R$_9$ respectivement) qui est connecté à la tension d'alimentation (U$_D$), de sorte qu'à travers les deux diviseurs de tension (R$_6$, R$_7$ ou R$_8$, R$_9$ respectivement), la valeur de pointe inférieure de la tension en triangle (U$_1$) est appliquée à un transistor (T$_1$ ou T$_2$) et la valeur de la pointe de tension supérieure est appliquée à l'autre, et en ce que la commande des transistors (T$_1$, T$_2$) s'effectue par des touches prévues sur l'installation de soudage sous gaz protecteur ou sur le chalumeau de cette installation.

Fig. 1

Fig. 2

Fig. 3

Fig. 4

Fig. 5